# EUROPEAN PATENT APPLICATION

(11) **EP 3 401 541 A1**
(43) Date of publication of application: **14.11.2018**
(21) Application number: 17020199.0
(22) Date of filing: 09.05.2017
(51) Int. Cl.: F03D 9/18

(54) **COMBINED HEAT AND POWER BATTERY**

(71) Applicant: EnergyServ SRL, Bucharest (RO)
(72) Inventor: Dragostin, Catalin-Marin, 021967 Bucharest (RO)
(74) Representative: Knoop, Philipp

(57) **Abstract**

In order to provide an arrangement and method for temporary storage and subsequent release of excessive energy, in particular generated by a wind farm, in a utility grid, which allows to process highly unpredictable and variable wind and solar electric energy in the most efficient way it is proposed that thermal energy storage means are provided.

## Description

CHP "BATTERY" -warm up with cold wind- (if we need heat, should we always burn something !?)

### TABLE OF CONTENT

1.Wind Power Generation, operational problems
2.Power System operational conditions, (as National Problem)
3.What is "CHP Battery" ?
4.Technology and method description
5.Heat Systems operational conditions (as Local Problem)
6. Economic and financial impact estimation
7. New opportunities & Financing
8. Case Study: Tulcea City

### 1. Wind Power Generation" operational problems

BALANCING COSTS (quote from EWEA Report, 2015,with maps updated to 2016)

"Worryingly, there are some notable exceptions. In a few Member States, balancing costs borne by wind power generators seem to be arbitrarily high and possibly prohibitive for new installations. In Bulgaria, the range is between 10 and 24€/MWh and in Romania, it not part of a large aggregator, wind power generators pay on average 8-10€/MWh.

Energy demand. This is generally a marginal fraction of the wholesale value of wind energy (about 10% or less). In 2014, average wind energy penetration rate in the EU was10.2%. EWEA expects this to increase to 14.9% by 2020, which suggests that in medium term, increases in balancing costs will not represent a significant share of total system cost."

Difficulties to calculate additional balancing costs, it is an unresolved methodological issue, which may not have a solution. There are 3 complications:
(1) Defining a suitable "non-wind" case;
(2) Identifying the highly non-linear nature of these costs;
(3) Calculating the wind balancing costs without comparable calculations for other types of generation that require also balancing related costs;
continued
- Applicant's opinion: probably some estimations could be reasonably prepared in the case of using the methodology of a "Least Cost Energy planning for power and heat", integrating all resources- fossil and RES; the electricity & heat must be approached simultaneously together,
   from an existing situation, as it is, and projected in the future
- Quote http://www.euractiv.com/section/electricity/interview/vattenfall-ceo- decarbonising-electricity-can-boost-its-use-for-transport-heating-and- cooling
- This present configuration proposal tries to be in line with all these above

### 2. Romanian Power System operational conditions, (as National Problem)

✔ Electricity Generation in 2016 in Romania was 61,80 TWh
✔ Wind Electricity Generation: 6,85 TWh, (11,07%) and PV 0,73 TWh 1,18%).

### Example of ~100 MW Wind Farm operation during 1 year

### General Observations (for Romanian conditions):

- Power generation follows a "U" type profile, ***fitted very well for the same profile of Heat Demand in Romania;***
- High generation is during the cold season (but, "higher the wind speed", higher errors in the predictability");
- Energy prices follow the same "U" type profile
- Yearly power generation ***specific profile of the wind farm*** is one of the tools to evaluate the "storage" requirements for "CHP Battery";
- This must be linked with the ***specific profile of the local Heat Demand -** All these above must be linked with optimal sizing of "**wind energy storage"** and **"heat storage"** (as described later in this presentation, in the next chapter).*

**3. What is CHP**
**"Battery"?**
- A method for ***S**torage* wind energy in the form of ***T**hermal **E**nergy (TES)*
   to:
   - cover *heat* demands in the *most efficient known way: **CHP***
   - *control totally* the wind energy throughput
   - allow the wind energy to enter the heat market as a "new fuel"
- A method *to decarbonize* the heat market
- Allows planning of Wind Farms not only from the *"electricity only"* perspective.

### POSITION OF TES

### 4. Technology and Method description

### STRATEGIC PARTNERS FOR "CHP BATTERY"

- Concept & EPC: ENERGY-SERV (Romania)
- www.energy-serv.ro
- Thermal Energy Storage: ENERGYNEST (Norway)
- www.energy-nest.com
- ORC Turbogenerator: TURBODEN (Italy)
- www.turboden.eu

### ENERGY NEST

- To be filled in

### TURBODEN

- To be filled in

### Technical Features of Equipment

Why this configuration is technically feasible and economic?
∘ Key elements of the "CHP Battery":
   ▪ All the equipment use "thermal-oil" as ***the same*** main energy agent (it is a well known and used energy media, possible to operate at ~450 C);
   ▪ All the equipment are tested and commercially available since many years;
∘ **The Electric Boiler:**
   ▪ The Electric Boiler, which will heat-up the thermal oil has a very quick response capability to power load variations ;
∘ **HeatCrete** (TES - Thermal Energy Storage):
   ▪ It can store heat energy, from thermal-oil, up to 420 C;
   ▪ It is already patented, tested, certified and commercially available
∘ CHP ORC:
   ▪ Thermal-Oil was and it is always one of the main best "heat sources" for ORC technology;
   ▪ The ORC turbo-generators have a very quick capability response to load variations and can be manufactured in ranges up to 20 MW/unit, or more;
   ▪ They can be used also, (due to their intrinsic capabilities) for providing "power system services"
   ▪ One of the best applications of the ORC is the CHP mode
   ▪ There are already operating thousands of MW capacities worldwide, Romania included

### 5. Heat Systems operational conditions (as Local Problem)

Typical yearly wind generation of a wind farm of ~100MWe capacity The importance of "How much" and "When" power is generated.

Electricity market prices vs. fossil fuel heat generation prices in the winter in Romania

Wind farm should choose the "best strategy" for heat market as well.

Electricity market prices vs. fossil fuel heat generation prices (summer, Romania)
Disturbing question: Should the Wind Farm exit from the Electricity Market?

### Heat market

CHP battery can operate in "high efficiency mode".

### 6. Economic and financial estimation

Factors influencing revenues of wind farms (without a CHP Battery)

Real case simulations for Romanian specific conditions
- It was simulated with a dedicated software for energy-system planning the operations of a 100 MWe capacity Wind Farm, for 2016 data;
- The CHP electric capacity was selected as 10 MWe to enable it for "system services" participation (>10 Mwe);
- Also, as per Transelectrica-Romania (National Electricity Transport Co.), strategy, it is required that, "for each 1 MWe wind capacity, in Romania, it is needed a tertiary reserve capacity of 0,6-0,8 MWe"
- Particular difficult situation when rapid decrease of tertiary reserve occurs: this may lead to forced shut-down of thermal power plants (condensing or CHP), or, shut down hydro (!?) and release water through by-pass. These all represent tremendous system costs!
- Simulations were executed for configuration described at pag.16
- Methodology used: "incremental analysis" for comparing situations and estimate the benefits/differences:
   - BAU (results of operations for 2016, without CHP Battery)
   - Operations with an "optimally sized CHP Battery"

Factors influencing Revenues of Wind Farms (with CHP Battery)

Why "CHP battery" is economically feasible

### Assume TAB 1, pag. 26 (winter)

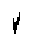 No CHP battery
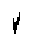 Assume 10 MWe wind generation
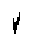 Revenue El. (during 01-06_Bloc_gol_1) =10MWe x 17 EUR/MWh= 170 EUR/h
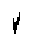 With CHP battery (24% electric eff.)
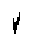 Assume 10 MWe stored/generated
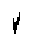 Revenue El. (during 07-22_Bloc_virf) = 24% x10 Mwe x 57.3 EUR/MWh = 137.5 EUR/h
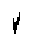 Revenue heat (during 07-22_Bloc-virf)= 72% x10 MWe x30EUR/MWh = 216 EUR/h
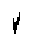 Total revenues = 353.5 EUR/h

Note: these are maximal values during winter

The minimum value is above 200 EUR/h

### Assume TAB 2, pag. 27 (summer)

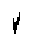 No CHP battery
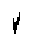 Assume 10 MWe wind generation
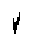 Revenue El. (during 01-06_Bloc_gol_1) = 10 MWe x 5.9 EUR/MWh= 59 EUR/h
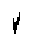 With CHP battery (24% electric eff.)
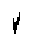 Assume 10 MWe stored/generated
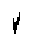 Revenue El. (during 07-22_Bloc_virf) = 24% x10 Mwe x 27.5 EUR/MWh = 66 EUR/h
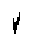 Revenue heat (during 07-22_Bloc_virf) = 72% x10 MWe x 30 EUR/MWh = 216 EUR/h
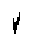 Total revenues = 282 EUR/h

Note: these are maximal values during summer

The minimum value is above 100 EUR/h.

There is the possibility not to supply heat and have CHP in "condensing mode" with electric efficiency ~30%.

Then, revenue from electricity only will be ~82.5 EUR/MWh

Why "CHP battery" is economically feasible?

### Technology comparison

Investment Costs "CHP battery" vs CHP on biomass.
- The applicants consider (TES + TOEB) rather a "Constant Heat Source" powered by wind instead of "Storage technology"
- That is why TES should not be compared with "pure storages" technologies on the market, but instead, maybe compared with "renewable biomass/biogas" energy generation technologies, with wind energy as "fuel"
- The "CHP Battery" proves to be competitive on renewables energy market, because:
   ▪ Primary: provides power & heat in an economic way (CHP);
   ▪ Secondary: it has capacity to "balance" the wind/PV power generation (storage features)

These are considered Key elements for patenting the method and system.

### Preliminary study results

- We have demonstrated that technically (except the Thermal Energy Storage-TES) the CHP Battery is feasible and present already on Romanian market;
- TES is a patented and certified technology of thermal enegy storage;
- It is confirmed that such a configuration is economic under the existing market conditions with a CHP Battery of 10 MWe, to cover ~30,000 MWh/year;
- Assumption: "everything generated above 20 MWe by the Wind Farm goes to CHP Battery" (this is an underestimation of the benefits since this analysis is done "post-factum" based on past data; during normal operations, the power & heat could be "optimally managed" based on riskless predictions);
- Benefits achieved:
   o Avoidance of Balancing Costs ~1,4 - 2 mill. EUR/year (it is confirmed what EWEA has indicated as ~8-10 EUR/MWh is the local "balancing costs" ;
   ∘ "Recovered energy" (generation above the prediction): ~0,4 mill. EUR/year
   ∘ Electricity & Heat controlled generation & management: 1-2,5 mill.EUR/year;
   ∘ Total benefits estimated: 2,8 - 4,9 mill.EUR/year
   ∘ Total Investment Costs: ~16 - 20 mill.EUR
   Example: Operations Simulation for 1 week, on hourly basis, during winter
   Assumption: everything generated above 20 MWe goes to "CHP Battery".
   Heat Demand: 80,000 MWh/year
   Profile of the Heat Demand during the same 1 week covered by CHP battery.
   (heat demand calculated on hourly basis, outside temperature dependent).
   Possible Configuration Arrangements
   (to meet the GC- Green Certificates- regulations)
   Worst case scenario:
   to use existing transport lines, as BAU case and negotiate with Transelectrica
- This scenario requires that, as the maximum limit, T&D Operators to charge for energy transport from the WindFarm to the CHP, maximum "avoided cost" for the investor (otherwise, it would not make economic sense to use their services, at today prices for T&D. It will increase useless the heat prices for heat consumers!)
- Probably it would be in the interest of the T&D Operators as well to allow, almost free of charge, such energy flows, under pre-agreed arrangements, depending on the lines congestions
- We believe that Government intervention (new regulations) should be designed for such applications: such case is not affecting only T&D operators !. It is much more important than this - it is a heating issue, fossil fuel replacement (decarbonizing), efficiency improvements of both power and heat systems. Since the EC has clearly stated that "Heat it is a local problem", (implying that it should be resolved locally), then, such regulations should be implemented without EC approval or even notification

Wind Farms in Romania vs T&D lines.

### 7. New Opportunities & Financing

- "New Fuel" for heating and heat cost reduction
- Planning wind farms, not only for electricity
- Improvement and efficiency increase of regional power systems with high degree of wind energy penetration (Dobrogea)
- Possible candidate-cities to introduce "wind heat" are in the first place those heated with coal fired plants;
- List of cities: Mangalia, Constanta, Navodari, Tulcea, Braila, Galati, Bacau, Roman, Iasi, Suceava, Resita, Drobeta, Timisoara, (probably even Bucharest, Ploiesti!?)
- A CHP Battery according to the invention is 100% clean and can be placed even in the heart of a city, near the heat consumers, avoiding distribution losses!

Financing using green certificates scheme (Specifics for Romanian market)
- Is there any the possibility to use existing delayed *Green Certificates* payments to finance *clean heat supply?*;
- It may be efficient to reimburse the wind operators with the value of unpaid GC, if the funds will be invested in such heat supply systems and, continue with payment of 2 GC during the heat supply ?!;
- In this way, it will be:
   - solved the issue of GC payments;
   - provided clean heat to consumers in a cost effective way;
   - "state aid" will go to much needed heat instead of electricity;
   - substantially improved the electric power system efficiency and operations
   - substantially reduced the GHG emissions in DH systems
   CHP Battery macroeconomic impact

### 8. Case Study: TULCEA city

Proposal for STRATEGO Project (*www.stratego-project.eu*)
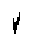 Design and installation of a "CHP Battery", wind powered, with a capacity of ~30-45 MWt and ~10-15 Mwe;
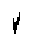 The configuration may be designed in 2 separate units, located anywhere, even in the city, to reduce the T&D losses ;
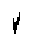 The CHP Batteries have "0" pollution, so they may be installed anywhere;
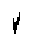 Configuration depends on the wind farm energy supplier and its balancing costs and spot electricity prices;
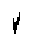 An unit should be min. 10 MWe to be able to provide "system services"
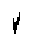 The Heat market prices supporting the investment are described further
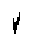 Anyone of Options 1 or 2 at pag. 37 are possible

### Tulcea Municipality: Heat Prices, 2016

- Heat prices approved by Municipality Decision no.13 - http://www.primariatulcea.ro/files/legislatie/hcl/2016/13.pdf
- Prices reflects the production, transmission, distribution and supply of heat *by SC Energoterm SRL,* local company
- Natural Gas Price forecast 2018 (Government decision with IMF): 17.5 EUR/MWh;
- Price increase (liberalisation) until 2021;
- Heat Generation cost (estimated): ~ 30 EUR/MWh
- Municipalities of Constanta have the corresponding prices approx. 25% higher and Mangalia, approx. 40% higher than Tulcea

| | | | |
|---|---|---|---|
| **Local Heat Price** | **Natural Gas** | **74.5 EUR/MWh, VAT included** | **20% paid by consumers** |
| | | | **80% local subsidy** |
| | **Fuel Oil** | **107.1 EUR/MWh, VAT included** | **20% paid by consumers** |
| | | | **80% local subsidy** |

### TULCEA City

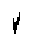 Wind Energy is the most significant renewable resource;
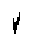 There is "high concentration" of wind power (farms) in vicinity of Tulcea;
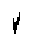 The whole Dobrogea region has the "highest concentration" of wind energy in Romania;
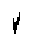 Other cities with District Heating systems (or possible to develop) in Dobrogea and neighbouring counties: Constanta, Navodari,
Mangalia, Hirsova, Cernavoda, Medgidia and then, Slobozia, Braila, Galati, Roman
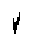 It may be designed a strategy to "decarbonize" all the district heating systems in the region based on abundant wind energy available!
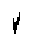 Heat energy market may be the "sink energy" available for reducing or elimination of "balancing requirements" in an economic way!

### CONCLUSIONS (resulted from Tulcea case)

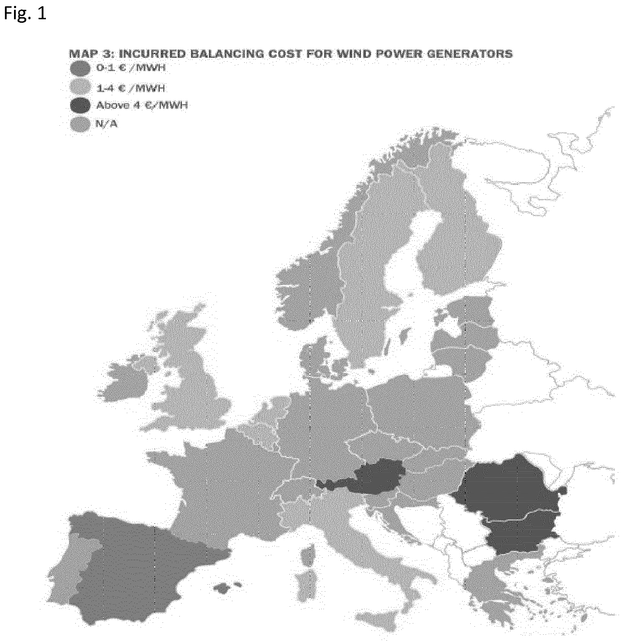

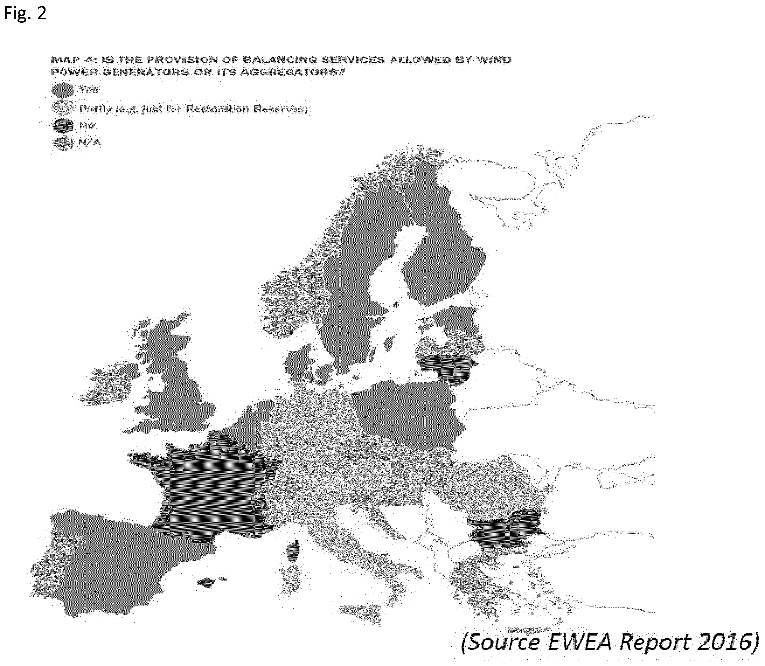

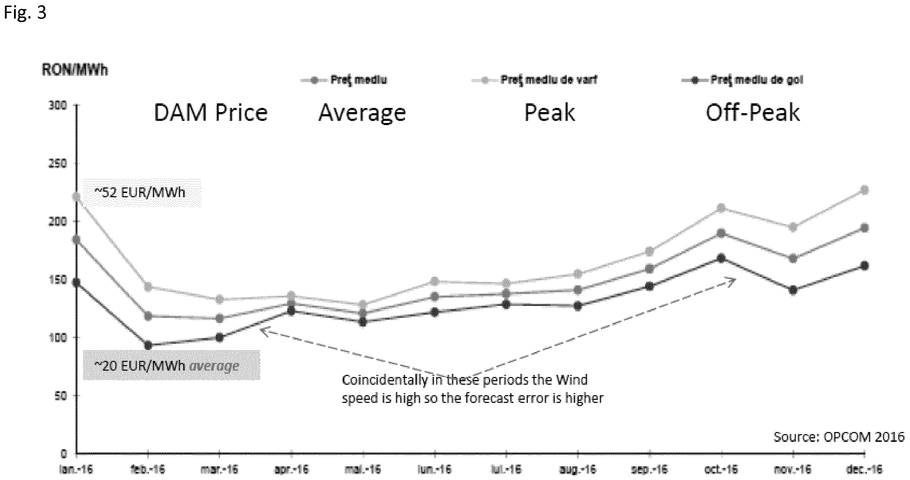

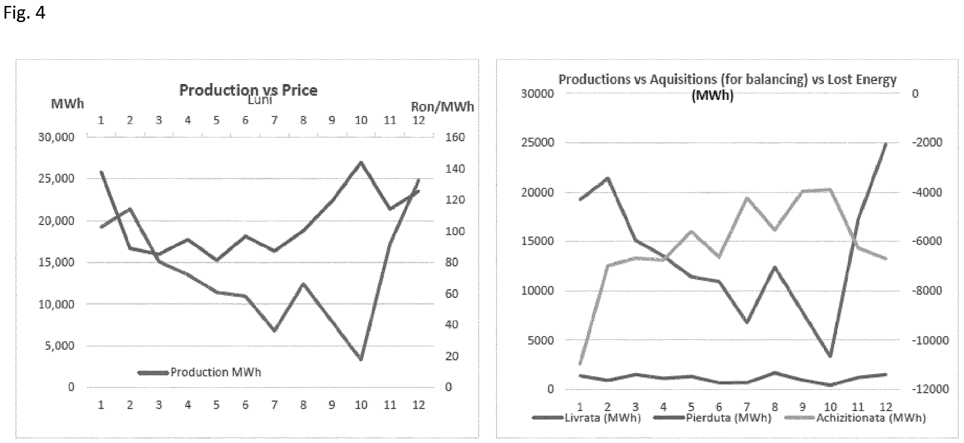

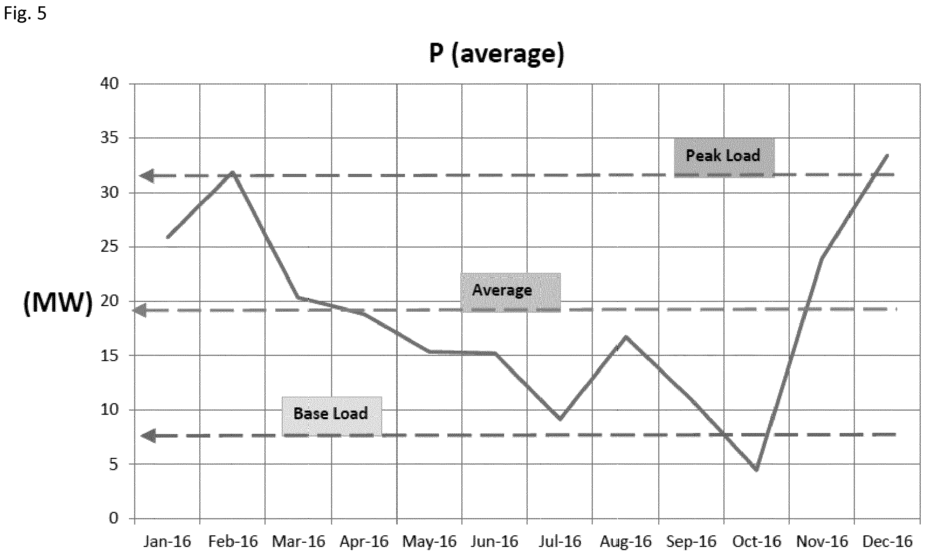

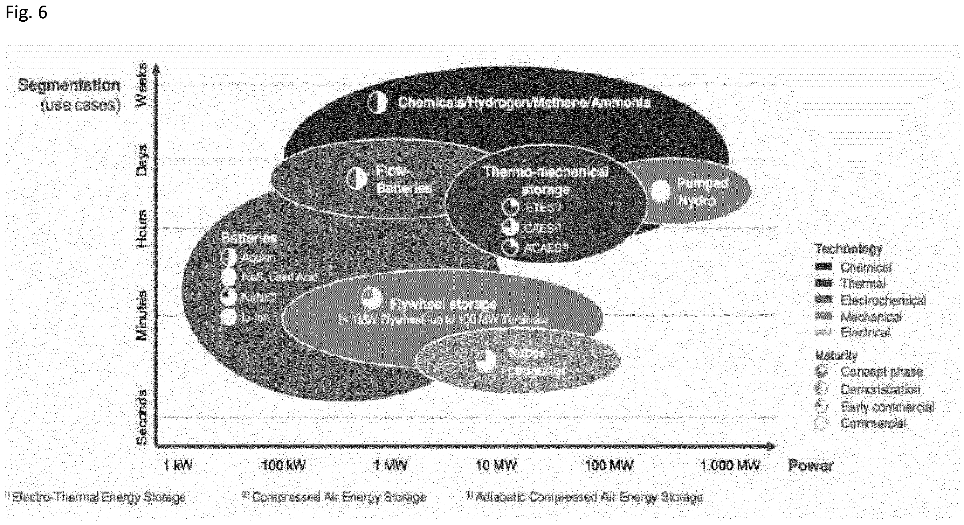

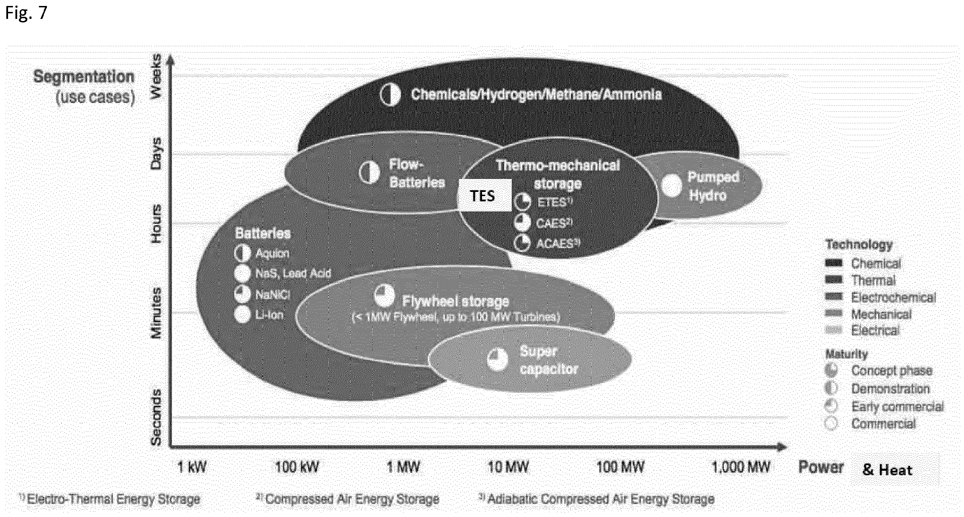

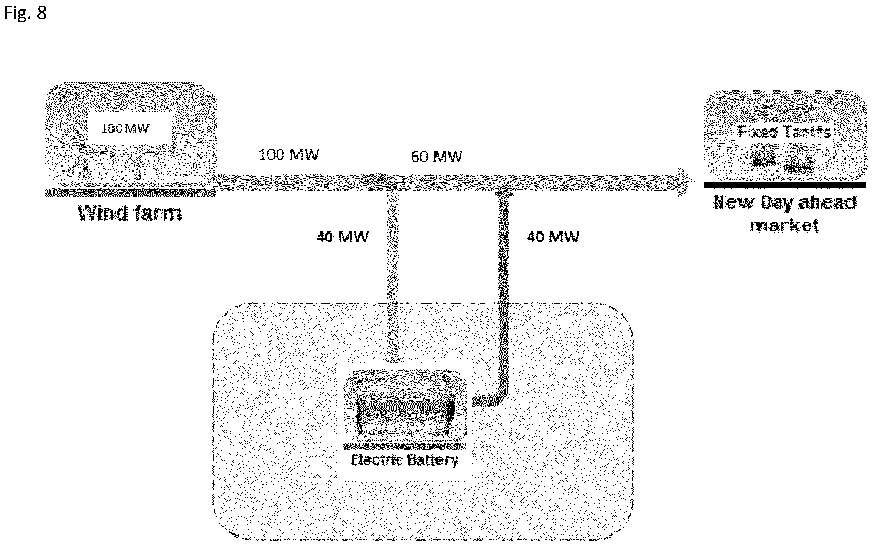

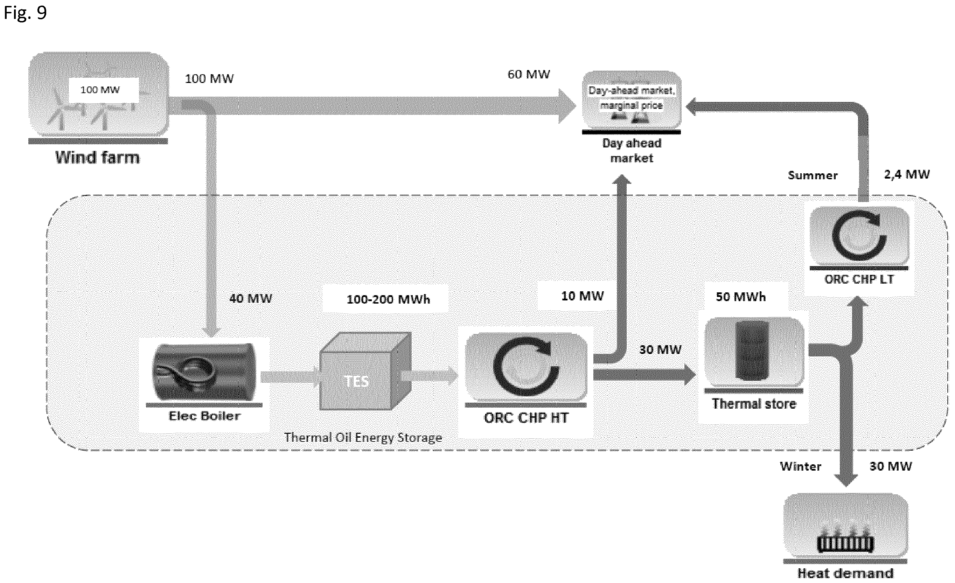

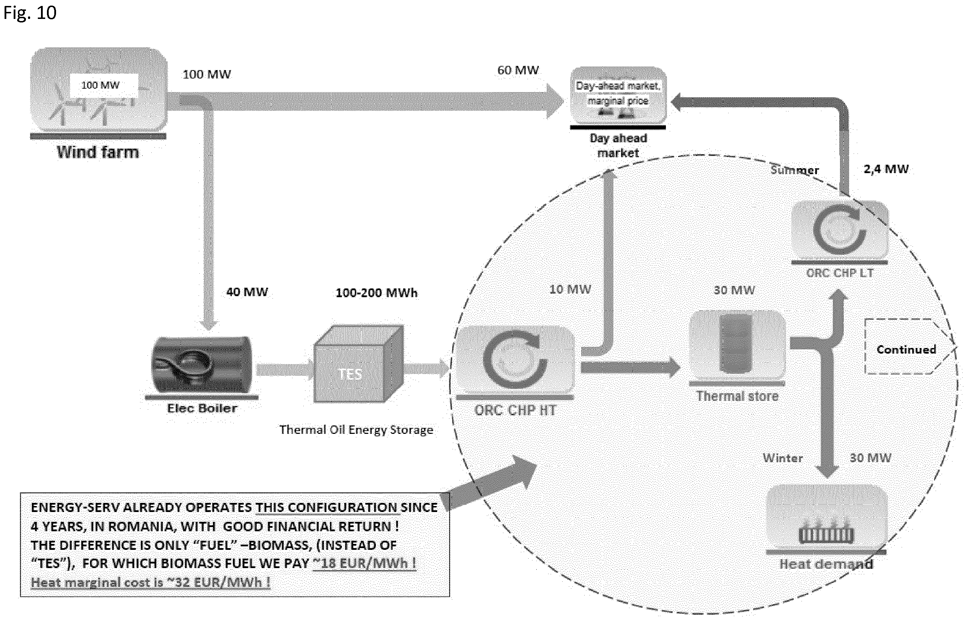

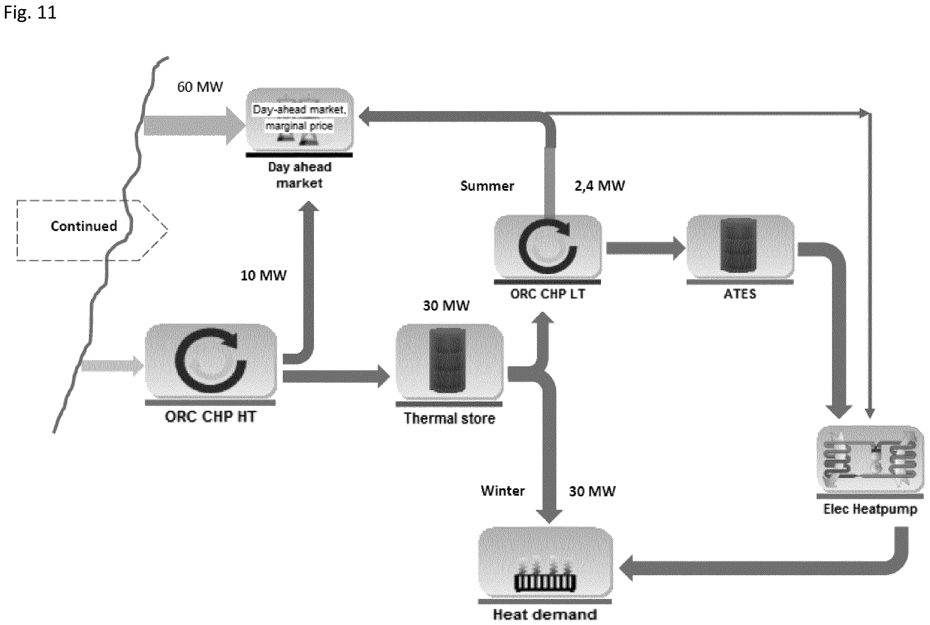

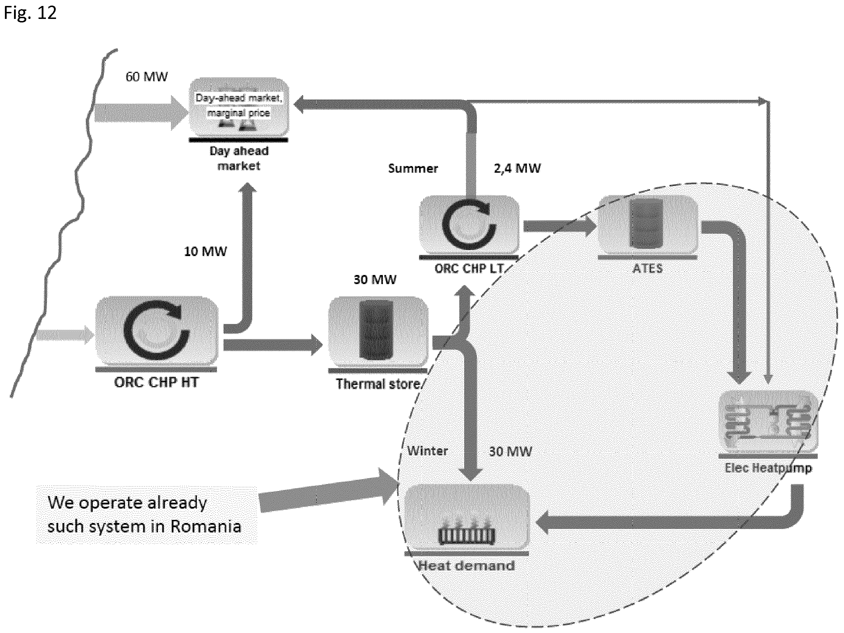

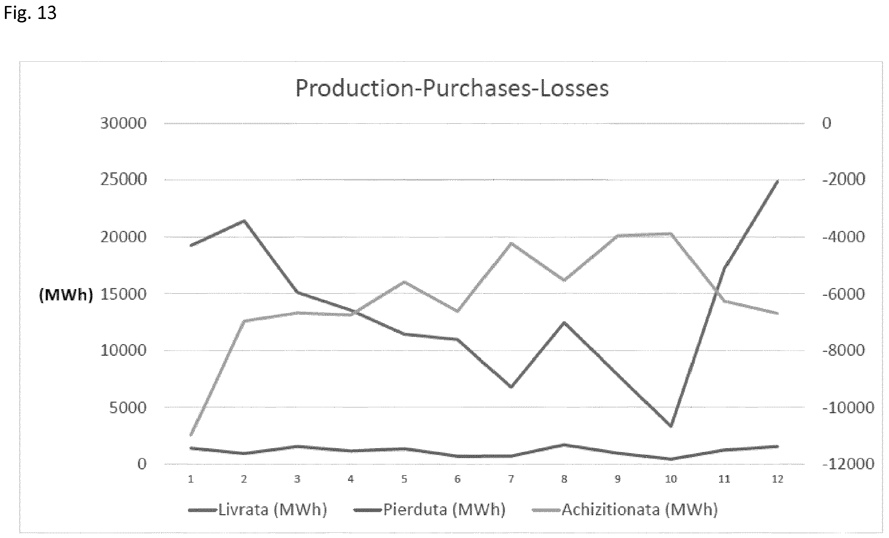

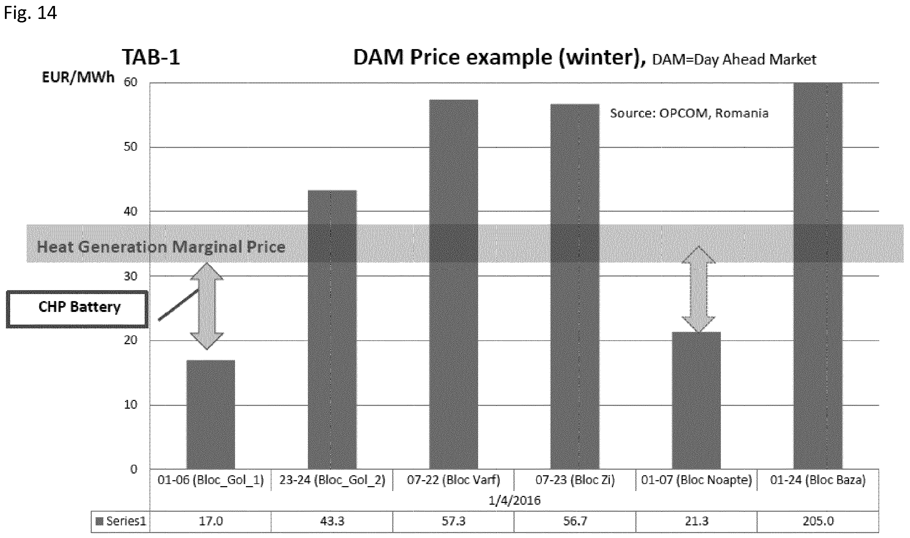

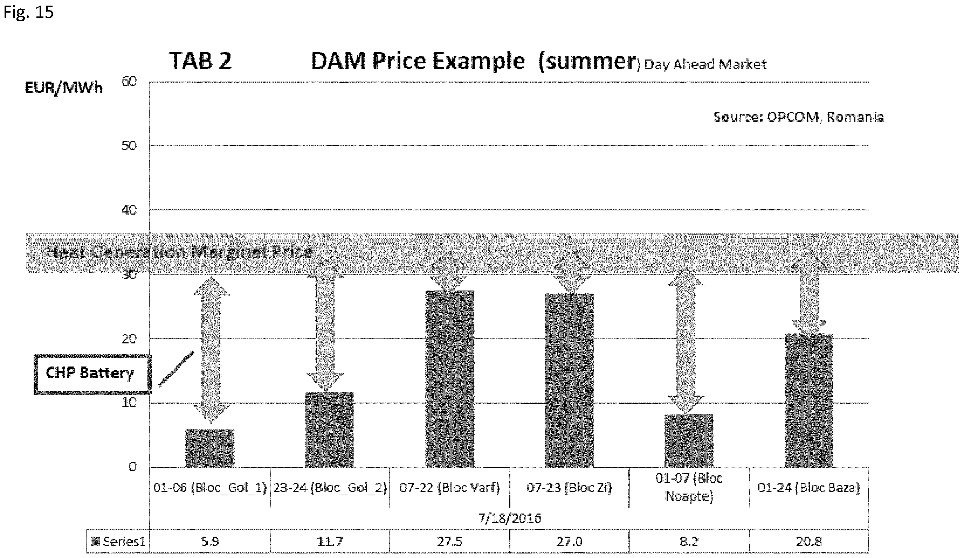

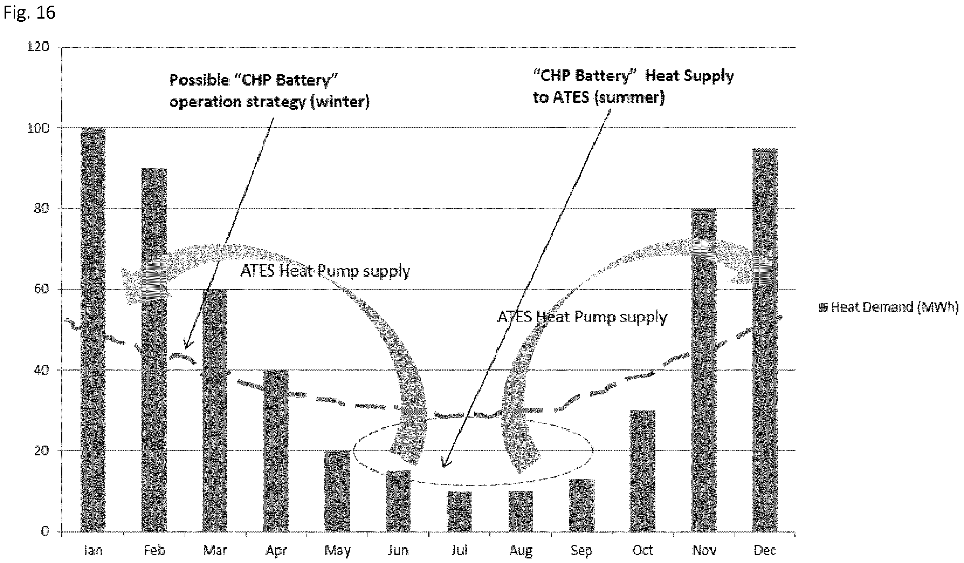

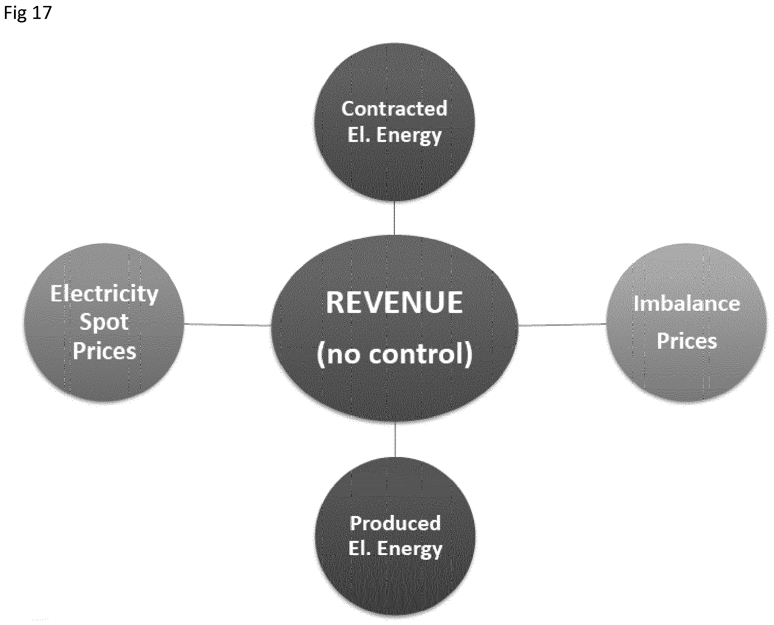

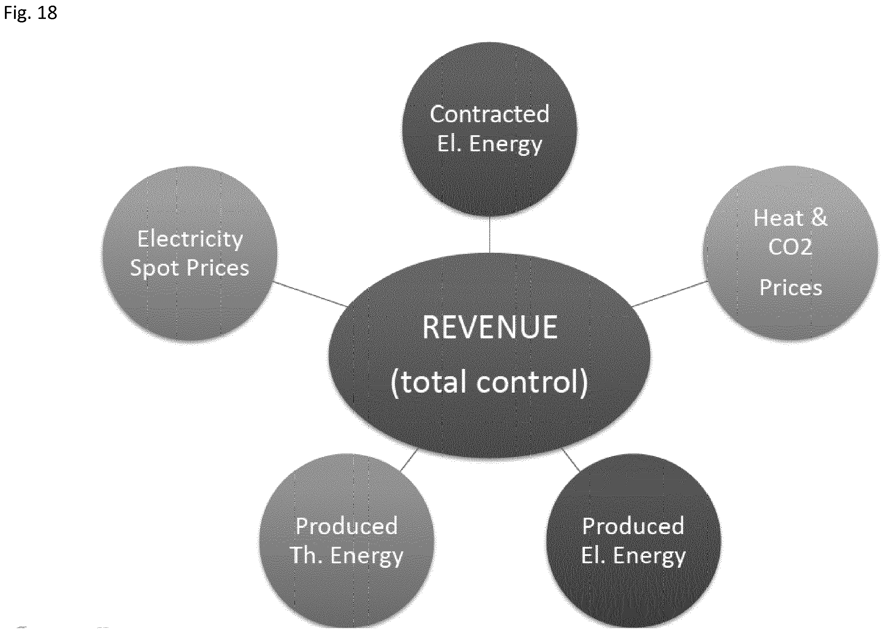

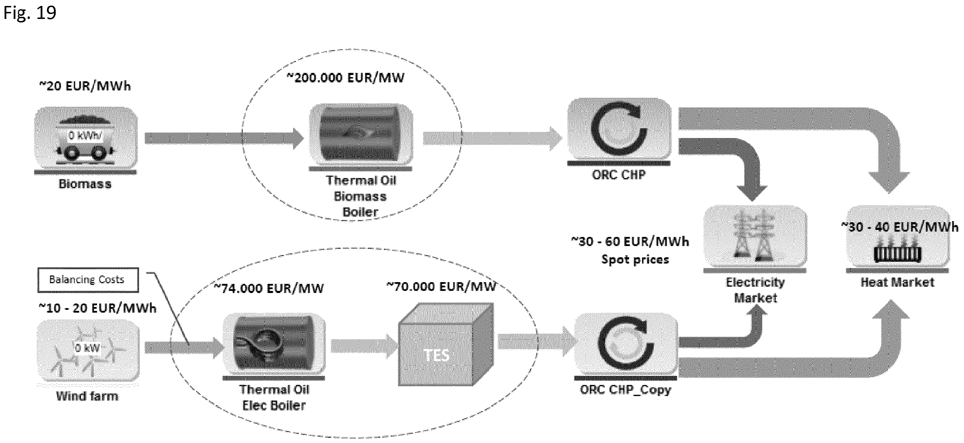

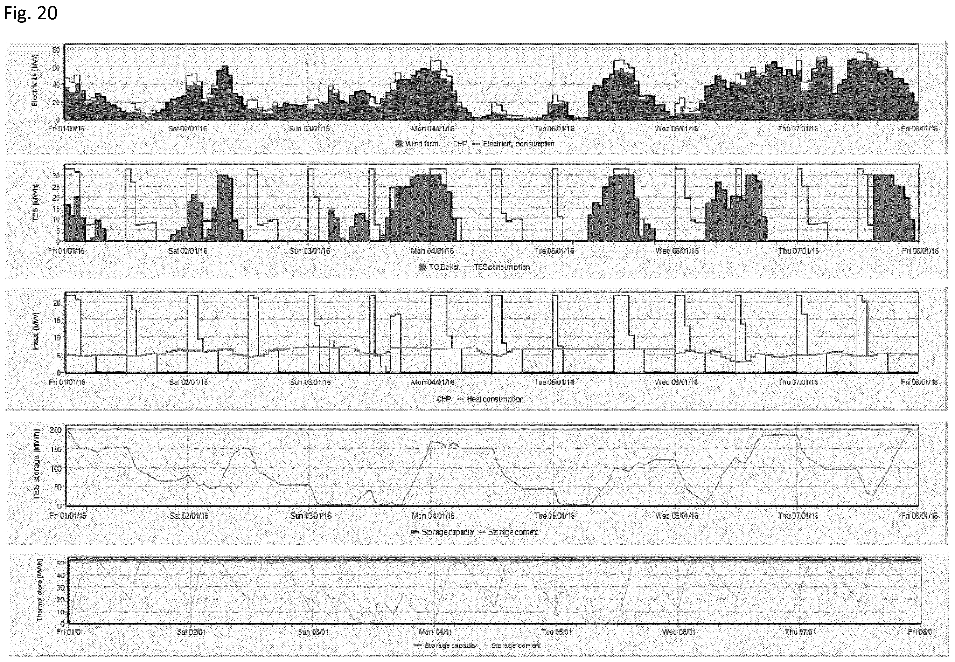

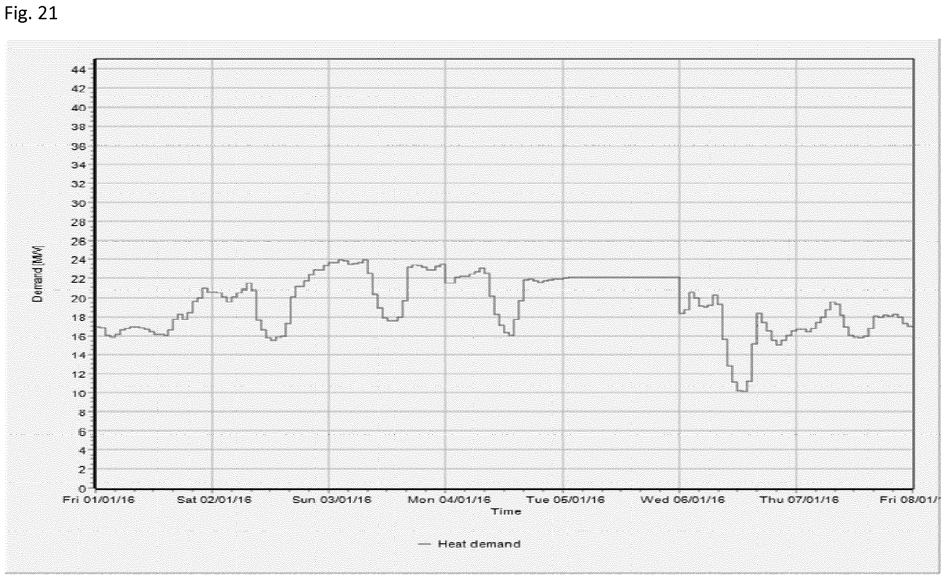

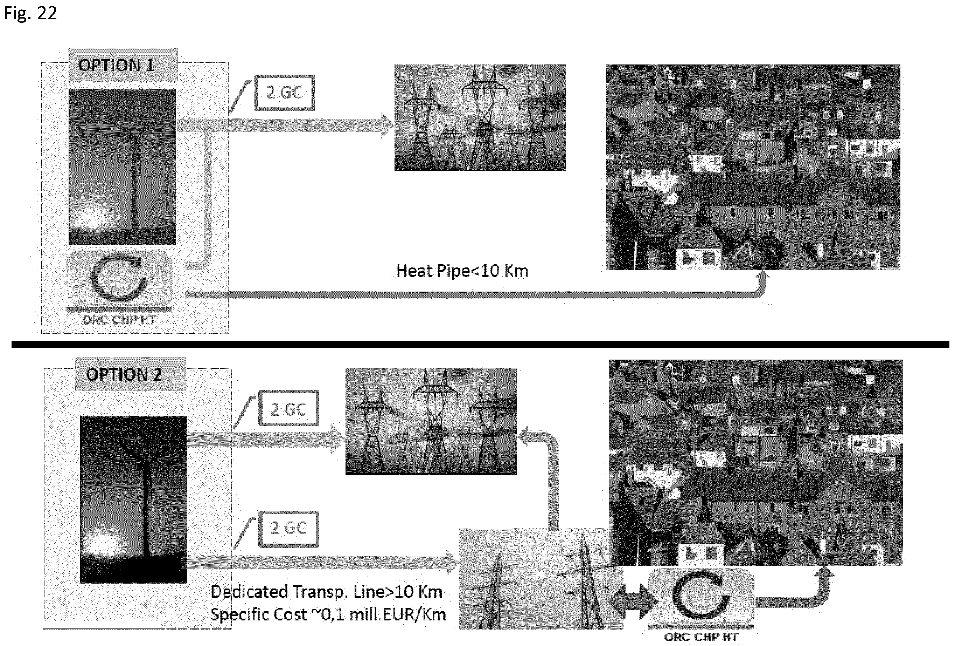

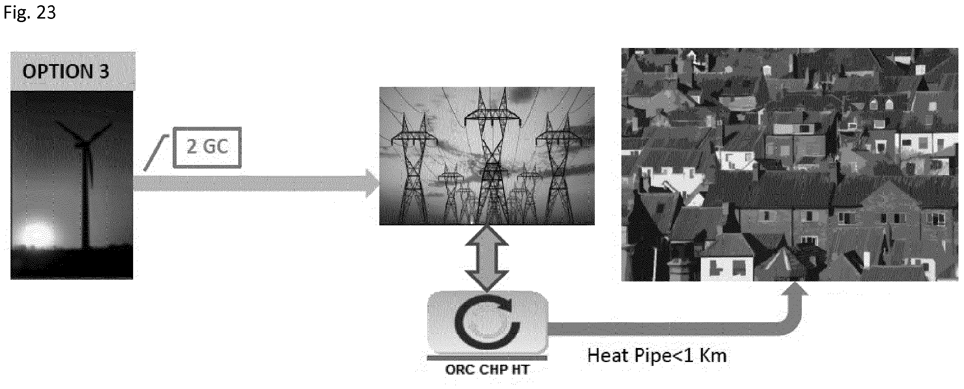

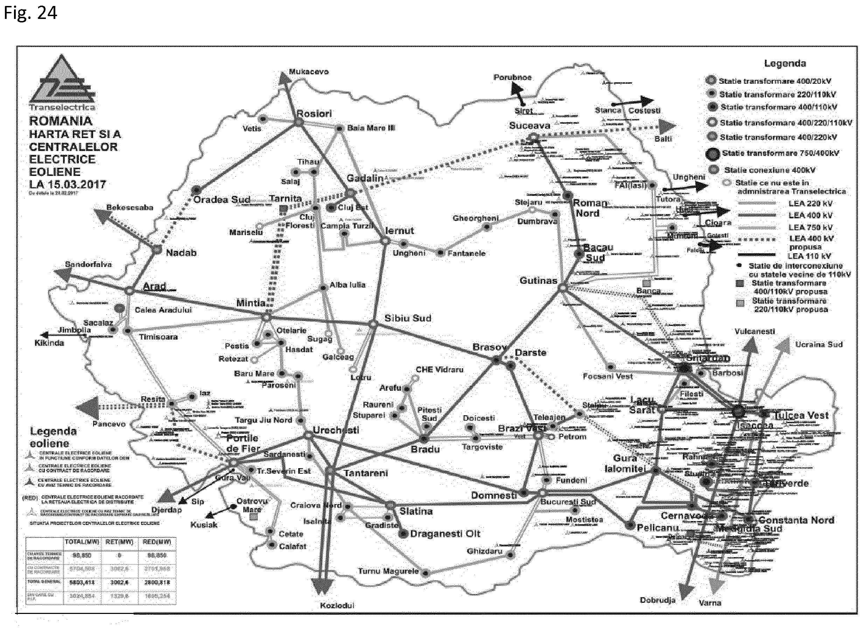

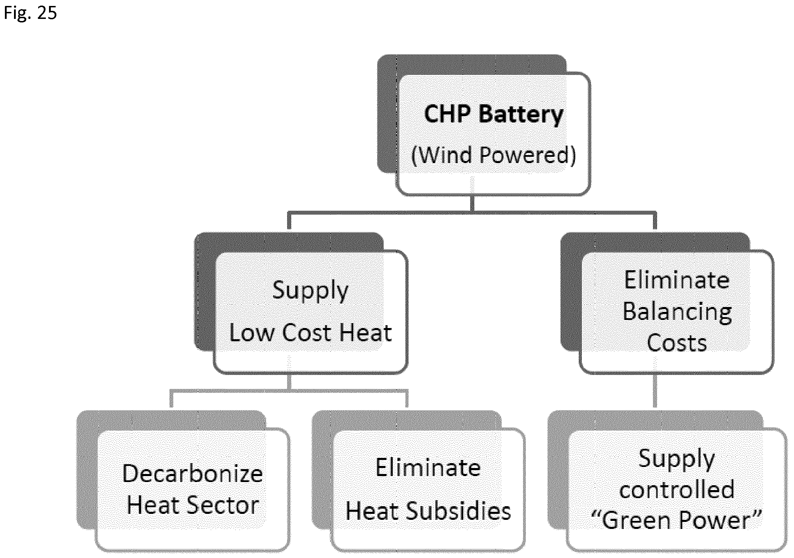

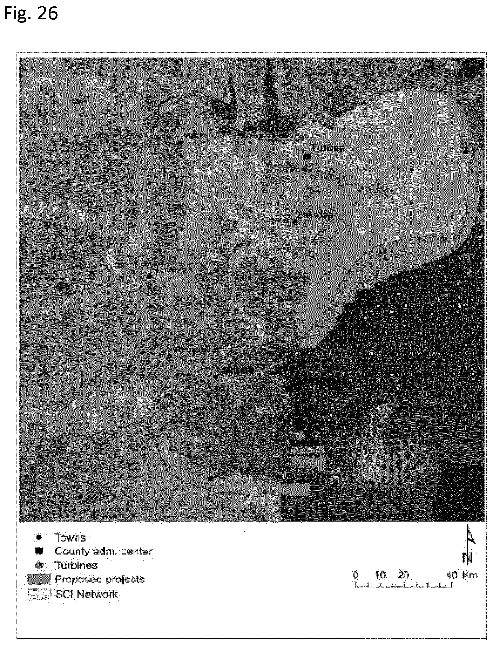

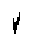 District Heating of Constanta, Navodari, Mangalia, Braila and Galati provide the highest levels of "sink energy" for balancing purposes, due to high penetration level of wind energy in Dobrogea;
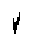 For each city, some energy wind operators may "associate" to supply power for heat generation; (Option 2, Fig. 22)
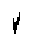 Probably, the most cost effective way could be a dedicated power transmission line, which may be a cheap option for 3-4 operators, for a distance of max. 20-30 Km (max. 3 mill.EUR)
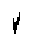 In the future, probably the wind farm planners may consider the heat supply options and not only electricity, for improving the operation efficiency and economics.

## Claims

1. Arrangement for temporary storage and subsequent release of excessive energy, in particular generated by a wind farm, in a utility grid, **characterized in that** thermal energy storage means are provided.

2. Arrangement according to claim 1, **characterized in that** the thermal energy storage means comprise a solid heat storage medium, in particular a concrete material.

3. Arrangement according to claim 1 or 2, **characterized in that** conversion means for converting electrical energy into thermal energy are provided.

4. Arrangement according to any one of the preceding claims, **characterized in that** the conversion means comprise a heating element as a resistor to electric current to create heat through electrical resistance.

5. Arrangement according to any one of the preceding claims, **characterized in that** re-conversion means for converting thermal energy stored in the thermal energy storage means to electrical energy are provided.

6. Arrangement according to any one of the preceding claims, **characterized in that** thermal energy transfer means, preferably capable of transferring thermal energy at temperatures above approximately 400°C, in particular thermal oil, are provided for transferring thermal energy between the conversion means and the thermal energy storage means and/or between the thermal energy storage means and the re-conversion means.

7. Arrangement according to any of the preceding claims, **characterized in that** the re-conversion means are formed to operate according to an organic ranking cycle and/or to operate on the thermal energy transfer means.

8. Arrangement according to any one of the preceding claims, **characterized in that** further thermal storage means are provided for storing thermal energy output from the re-conversion means.

9. Arrangement according to any one of the preceding claims, **characterized in that** further re-conversion means for converting thermal energy stored in the further thermal storage means to electrical energy are provided.

10. Arrangement according to any one of the preceding claims, **characterized in that** it comprises thermal output means for outputting thermal energy and electrical output means for outputting electrical energy.

11. Arrangement according to any of the preceding claims, **characterized in that** it comprises control means for controlling the ratio of thermal energy for output to the thermal output means to electrical energy for output to the electrical output means.

12. Arrangement according to any one of the preceding claims, **characterized in that** the control means act upon the re-conversion means and/or upon the further re-conversion means.

13. Arrangement according to any one of the preceding claims, **characterized in that** aquifer thermal energy storage means are provided for storing residual thermal energy from the further re-conversion means.

14. Method for temporarily storing and subsequently releasing of excessive energy, in particular generated by a wind farm, in a utility grid, **characterized in that** the excessive energy is converted to thermal energy and then stored in thermal energy storage means

15. Method according to claim 14, **characterized in that** an arrangement according to one of claims 1 to 13 is employed.
